# DEMANDE DE BREVET EUROPEEN

(11) **EP 0 679 916 A1**
(43) Date de publication de la demande: **02.11.1995**
(21) Numéro de dépôt: 95400946.0
(22) Date de dépôt: 26.04.1995
(51) Int. Cl.: G02B 6/38

(54) **Connecteur de fibres optiques**

(30) Priorité: 27.04.1994 FR 9405093
(71) Demandeur: RADIALL, Société Anonyme dite:, 93116 Rosny-Sous-Bois (FR)
(72) Inventeur: Maillot, Gérard, F-93360 Neuilly Plaisance (FR); Marie, Alain, F-94320 Thiais (FR)
(74) Mandataire: Leszczynski, André

(57) **Abrégé**

Connecteur de fibres optiques comprenant deux éléments de connecteur comportant chacun un boîtier apte à être assemblé avec le boîtier de l'autre élément de connecteur, des moyens de guidage pour l'assemblage du boîtier avec l'autre boîtier, et un module de connexion, logé dans le boîtier, apte à réaliser la connexion des fibres optiques par rapprochement et alignement avec un autre module de connexion logé dans l'autre boîtier.

Les deux éléments de connecteur sont identiques, et chaque élément de connecteur comporte, comme moyens de guidage, d'une part, un doigt de guidage (15) et d'autre part, un canal de guidage (16), ledit doigt de guidage (15) étant apte à pénétrer dans le canal de guidage (16) de l'autre élément de connecteur et ledit canal de guidage (16) étant apte à recevoir le doigt de guidage (15) de l'autre élément de connecteur lors de l'accouplement des deux éléments de connecteur.

## Description

La présente invention concerne un connecteur de fibres optiques de type hermaphrodite comprenant deux éléments de connecteur identiques.

On connaît des connecteurs de fibres optiques qui comportent deux éléments de connecteur identiques. Chaque élément de tels connecteurs comprend un boîtier et un module de connexion de fibres optiques logé dans ce boîtier, apte à réaliser la connexion des fibres optiques par rapprochement et alignement avec le module de connexion qui est logé dans le boîtier de l'autre élément de connecteur.

Ces dispositifs connus sont en général suffisamment résistants pour assurer une bonne protection des fibres optiques et des modules de connexion qui sont logés dans les boîtiers.

En revanche, la précision de l'alignement des modules de connexion n'est pas toujours satisfaisante, ce qui peut se traduire par des défauts de transmission des signaux optiques véhiculés par les fibres.

La présente invention vise à fournir un connecteur de fibres optiques qui répond aux exigences de robustesse et procure en outre une bonne précision de positionnement de manière à assurer une connexion de bonne qualité entre les fibres optiques.

La présente invention a pour objet un connecteur de fibres optiques comprenant deux éléments de connecteur comportant chacun un boîtier apte à être assemblé avec le boîtier de l'autre élément de connecteur, des moyens de guidage pour l'assemblage du boîtier avec l'autre boîtier, et un module de connexion, logé dans le boîtier, apte à réaliser la connexion des fibres optiques par rapprochement et alignement avec un autre module de connexion logé dans l'autre boîtier, caractérisé par le fait que les deux éléments de connecteur sont identiques et que chaque élément de connecteur comporte, comme moyens de guidage, d'une part, un doigt de guidage et, d'autre part, un canal de guidage, ledit doigt de guidage étant apte à pénétrer dans le canal de guidage de l'autre élément de connecteur et ledit canal de guidage étant apte à recevoir le doigt de guidage de l'autre élément de connecteur, lors de l'accouplement des deux éléments de connecteur.

Lors de l'accouplement de deux éléments de connecteur selon l'invention, les doigts de guidage et les canaux de guidage correspondants assurent un bon positionnement relatif des deux boîtiers, de telle sorte que les modules de connexion des deux éléments de connecteur sont correctement rapprochés et alignés l'un avec l'autre pour réaliser la connexion des fibres optiques.

Dans un mode de réalisation préféré de l'invention, les modules de connexion comportent leurs propres organes de guidage, indépendants des doigts de guidage des boîtiers, lesquels assurent le positionnement des deux boîtiers l'un par rapport à l'autre.

Ces organes de guidage spécifiques aux modules de connexion assurent, avec une précision supérieure à celle des doigts de guidage des boîtiers, l'alignement optimal desdits modules de connexion.

Dans ce mode de réalisation, les modules de connexion sont montés dans leur boîtier respectif avec un jeu permettant un mouvement, de préférence à six degrés de liberté, de chaque module de connexion à l'intérieur du boîtier correspondant.

Ainsi, lors de l'accouplement des deux éléments de connecteur selon l'invention, les doigts de guidage des boîtiers assurent un premier positionnement des boîtiers l'un par rapport à l'autre, puis les organes de guidage des deux modules de connexion positionnent ces derniers l'un par rapport à l'autre avec une grande précision, en provoquant, le cas échéant, leur déplacement à l'intérieur du boîtier.

Dans une première forme de réalisation de l'invention, le boîtier comporte des moyens de retenue coopérants et déverrouillables entre chaque doigt de guidage et le canal de guidage correspondant.

Selon une première variante de cette forme de réalisation, les moyens de retenue comprennent, à l'extrémité du doigt de guidage, une gorge transversale, de préférence découpée en biseau, et au voisinage de l'extrémité interne du canal de guidage, une pièce de verrouillage transversalement mobile entre une position dans laquelle elle dépasse dans le canal de guidage et peut pénétrer dans la gorge d'un doigt de guidage engagé dans le canal, et une position dans laquelle elle libère le canal de guidage.

Dans une seconde variante de cette forme de réalisation, le canal de guidage débouche à l'extérieur du boîtier dans sa partie arrière, et les moyens de retenue comprennent, à l'extrémité du doigt de guidage, un filetage hélicoïdal dont les filets sont centrés sur l'axe du boîtier, et, au voisinage de la partie arrière du canal de guidage débouchant à l'extérieur du boîtier, une douille munie d'un filetage interne, axialement solidaire du boîtier, et apte à se visser sur l'extrémité du doigt de guidage de l'autre boîtier lorsque les deux éléments de connecteur sont accouplés.

Dans un mode de réalisation préféré de l'invention, le module de connexion comporte un canal traversant destiné à coopérer avec un tube ou tige-guide de l'autre module de connexion de l'autre élément de connecteur et le boîtier de l'élément de connecteur comporte une tige obturatrice montée coulissante dans ledit boîtier et apte à s'engager dans le canal traversant du module de connexion en venant à effleurement de la face frontale dudit boîtier, un moyen de rappel qui repousse vers l'avant la tige obturatrice, et une tige d'appui solidaire de la tige obturatrice et parallèle à cette dernière, agencée de manière à ce que, lors de l'accouplement des deux éléments de connecteur, la tige d'appui prenne appui sur l'autre boîtier et repousse vers l'arrière la tige obturatrice, laquelle libère alors le canal traversant du module de connexion. Le tube ou tige-guide de l'autre module de connexion peut alors s'engager dans le canal ainsi libéré.

Dans une première variante de cette forme de réalisation, la tige d'appui fait saillie à l'avant de la face frontale du boîtier et prend appui sur la face frontale de l'autre boîtier, lors de l'accouplement des deux éléments de connecteur.

Dans une seconde variante, la tige d'appui est logée dans le canal de guidage du boîtier et prend appui sur le doigt de guidage de l'autre boîtier, lors de l'accouplement des deux éléments de connecteur.

Dans le but de mieux faire comprendre l'invention, on va en décrire maintenant deux modes de réalisation donnés à titre d'exemples non limitatifs, en référence au dessin annexé dans lequel :
- la figure 1 est une vue en coupe axiale d'un élément de connecteur selon un premier mode de réalisation de l'invention,
- la figure 2 est une vue en coupe axiale d'un connecteur selon un premier mode de réalisation de l'invention représentant deux éléments de connecteur en cours d'accouplement,
- la figure 3 est une vue analogue à la figure 2 après accouplement des deux éléments de connecteur,
- la figure 4 est une vue de détail de la figure 1,
- la figure 5 est une vue de gauche de la figure 4,
- la figure 6 est une vue de dessous de la figure 4,
- la figure 7 est une vue en coupe axiale d'un connecteur selon un second mode de réalisation de l'invention en cours d'accouplement,
- la figure 8 est une vue selon VIII de la figure 7, et
- la figure 9 est une vue analogue à la figure 7 après accouplement des deux éléments de connecteur.

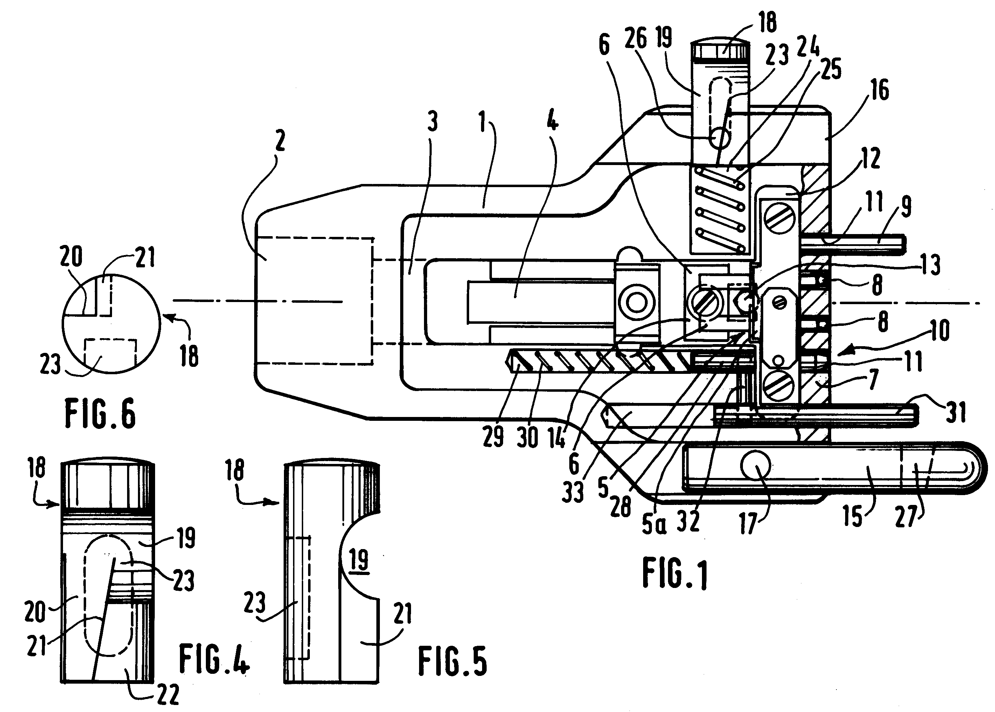

Sur les figures 1 à 6, l'élément de connecteur comporte un boîtier 1 en matière plastique dont la partie arrière définit un logement 2 pour recevoir l'extrémité d'un câble gainé non représenté.

A la manière connue, l'extrémité de la gaine du câble est immobilisée dans le logement 2 par un moyen approprié non représenté, tandis que les fibres optiques du câble pénètrent dans le boîtier 2.

A cet effet, le logement 2 se prolonge à l'intérieur du boîtier 1 par un canal 3.

Le canal 3 débouche dans un espace intérieur au boîtier où se trouve un manchon 4 qui est destiné à guider les fibres optiques du câble vers l'avant de l'élément de connecteur jusqu'à un module de connexion 5 placé à l'avant du boîtier.

Chaque fibre peut pénétrer dans un fourreau 6 du module de connexion, lequel en comporte deux dans l'exemple illustré.

Le boîtier 1 est obturé à l'avant par une plaque frontale 7 qui est munie d'orifices 8 dans lesquels les fourreaux 6 du module de connexion 5 s'engagent pour venir à l'effleurement de ladite plaque frontale 7.

Le module de connexion 5 comporte des organes de guidage constitués par un tube ou une tige-guide 9 et un canal traversant 10, aptes à coopérer respectivement avec un canal traversant et un tube ou tige-guide d'un autre module de connexion d'un autre élément de connecteur, au travers d'orifices 11 prévus à cet effet dans la plaque frontale 7.

Le module de connexion 5 est compris dans un logement 12 qui présente des dimensions légèrement supérieures à celles du module de connexion 5 de manière à permettre à ce dernier de se déplacer légèrement dans le boîtier 1.

La face arrière 5a du module de connexion 5 prend appui sur une bille 13 qui est sertie dans un support 14, lui-même vissé dans le boîtier 1. Cette bille 13 joue le rôle d'une rotule qui empêche le recul du module de connexion 5 sans lui imposer d'orientation particulière lors de l'accouplement de l'élément de connecteur avec un autre élément de connecteur.

De part et d'autre du module de connexion 5, le boîtier comporte un doigt de guidage 15 et un canal de guidage 16 de dimensions correspondantes.

Le doigt de guidage 15 est solidarisé au boîtier 1 par un rivet 17.

Le canal de guidage 16 comporte un moyen de retenue d'un doigt de guidage d'un autre élément de connecteur à assembler, constitué par une pièce de verrouillage 18.

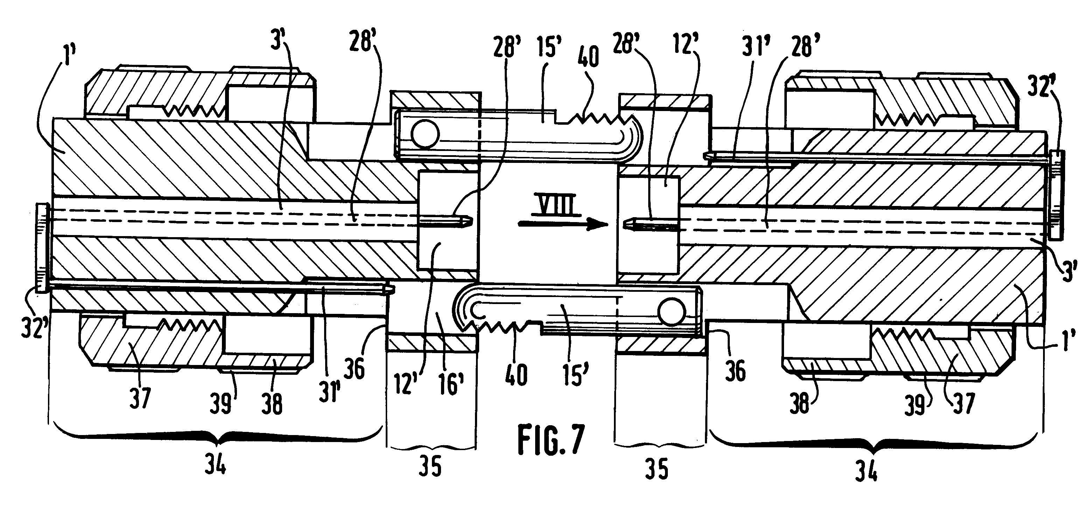

Cette pièce de verrouillage 18 se présente sous la forme d'un petit cylindre plein dans lequel sont réalisées des découpes qui sont plus clairement visibles sur les figures 4 à 6.

La pièce 18 comporte une gorge cylindrique 19 d'axe perpendiculaire à l'axe de ladite pièce 18, et dont le diamètre est légèrement supérieur à celui du doigt de guidage 15.

Une zone plane 20, parallèle à l'axe de la pièce 18, s'étend depuis le fond de la gorge 19 jusqu'à l'une des extrémités de la pièce 18 en n'étant découpée que sur une moitié de cette dernière selon un plan 21 perpendiculaire à ladite zone plane 20.

Le plan 21 est oblique par rapport à l'axe de la pièce 18.

La partie 22 située de l'autre côté de ce plan 21 est cylindrique.

Sur son côté opposé à la gorge 19 et à la zone plane 20, la pièce 18 comporte un évidement oblong 23.

La pièce 18 est placée dans le boîtier dans un logement cylindrique 24 qui traverse perpendiculairement le canal de guidage 16 et débouche sur le côté du boîtier 1.

La pièce 18 fait saillie à l'extérieur du boîtier. Elle est mobile en translation axiale dans son logement 24, en étant repoussée vers l'extérieur par un ressort 25, et limitée dans sa course par un pion 26 solidaire du boîtier qui pénètre dans l'évidement oblong 23.

On voit que la pièce 18 peut prendre une position enfoncée dans laquelle elle est rentrée dans son logement sous l'effet d'une pression exercée depuis l'extérieur du boîtier.

Dans cette position enfoncée, la gorge cylindrique 19 coïncide avec le canal de guidage 16 et libère complètement ce dernier, permettant d'y introduire ou d'en dégager librement un doigt de guidage d'un autre élément de connecteur selon l'invention.

En l'absence de pression extérieure, la pièce 18 prend, sous l'effet du ressort 25, une position sortie dans laquelle sa partie 22 occupe partiellement le canal de guidage 16.

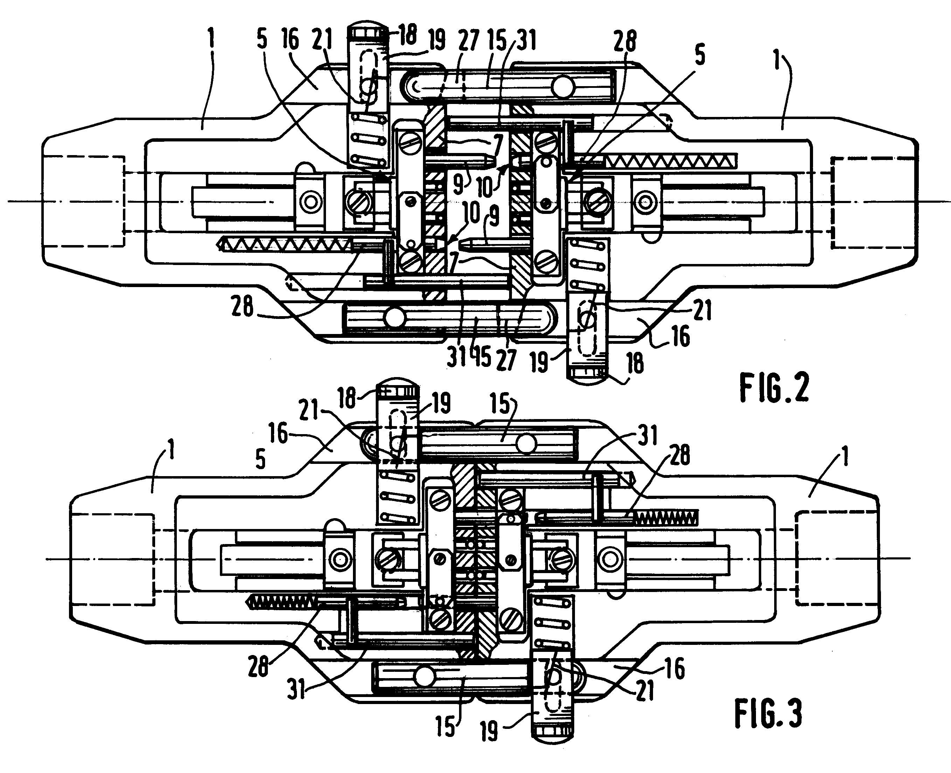

Dans cette position sortie de la pièce 18, si l'élément de connecteur est accouplé à un autre élément de connecteur identique, comme représenté sur la figure 3, la pièce 18 en position sortie coopère avec une gorge 27 prévue à l'extrémité avant du doigt de guidage 15 correspondant.

La gorge 27 est également biseautée de sorte que l'effort exercé sur le doigt de guidage 15 par le plan 21 se traduit par une traction axiale dans le sens d'un rapprochement des deux boîtiers 1.

Une tige obturatrice 28 est montée axialement coulissante dans le boîtier au droit du canal 10 du module de connexion 5.

La tige obturatrice 28 est mobile dans un logement 29 où elle est repoussée vers l'avant par un ressort 30 pour traverser le canal 10 du module de connexion et se positionner au repos à effleurement de la plaque frontale 7 du boîtier.

Dans cette position au repos, la tige obturatrice 28 protège le boîtier 1 contre l'introduction de poussières par l'orifice 11 et au travers du canal 10.

Une tige d'appui 31, parallèle à la tige obturatrice 25 solidarisée à cette dernière par une liaison 29, évolue axialement dans un logement 30.

La tige d'appui 28 fait saillie vers l'avant du boîtier au-delà de la plaque frontale 7.

Comme on le voit sur les figures 2 et 3, lors de l'accouplement des deux éléments de connecteurs, la tige d'appui 31 de chaque élément de connecteur prend appui sur la plaque frontale 7 de l'autre élément de connecteur, ce qui provoque le retrait de tige obturatrice 28 et la libération du canal 10 de chaque module de connexion 5.

Le tube ou tige-guide 9 correspondant de l'autre module de connexion peut alors pénétrer librement dans ledit canal 10 pour assurer un positionnement relatif optimal des deux modules de connexion 5, indépendamment des deux boîtiers 1.

On peut noter que le tube ou tige-guide 9 ne vient pas au contact de la tige obturatrice 28 de manière à éviter toute déformation du tube ou tige-guide lors de l'accouplement des deux éléments de connecteur.

Dans le mode de réalisation des figures 7 à 9, chaque boîtier 1' comporte également un canal 3' et un logement 12' prévu pour recevoir un module de connexion, non représenté, identique à celui des figures 1 à 3.

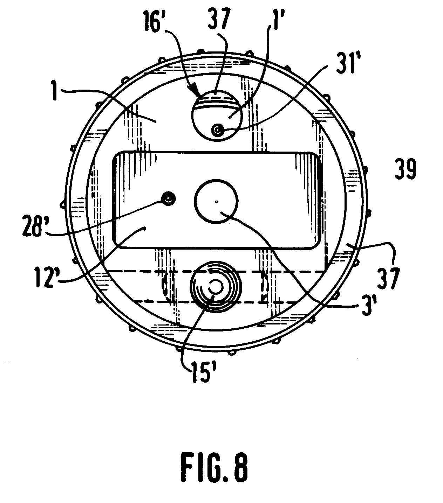

Dans ce mode de réalisation, chaque boîtier 1' présente une forme extérieure sensiblement cylindrique, comme on le voit sur la figure 8, avec une partie arrière 34 de petit diamètre et une partie avant 35 de grand diamètre, séparées par un épaulement annulaire 36.

Une douille filetée 37 est libre de coulisser axialement et de tourner autour de la partie arrière 34 de chaque boîtier 1' en étant limitée axialement vers l'avant par l'épaulement 36.

Dans le cas présent, la douille filetée 37 comporte en outre un prolongement tubulaire avant 38 qui recouvre la partie avant de grand diamètre 35 du boîtier 1'.

Des nervurages 39 sont en outre réalisés sur la face externe de la bague pour faciliter sa préhension.

Le canal de guidage 16' de chaque boîtier 1' est parallèle à l'axe dudit boîtier et se situe à la fois dans sa partie arrière de petit diamètre et dans sa partie avant de grand diamètre, comme on le voit notamment sur la figure 3.

De cette manière, le canal de guidage 16' débouche à l'extérieur du boîtier 1' dans sa partie située dans la partie 34 du boîtier.

Chaque doigt de guidage 15' est muni d'une portion de filetage externe 40 dont les filets sont centrés sur l'axe du boîtier 1' et sont aptes à coopérer avec les filets internes de la douille 37 correspondante.

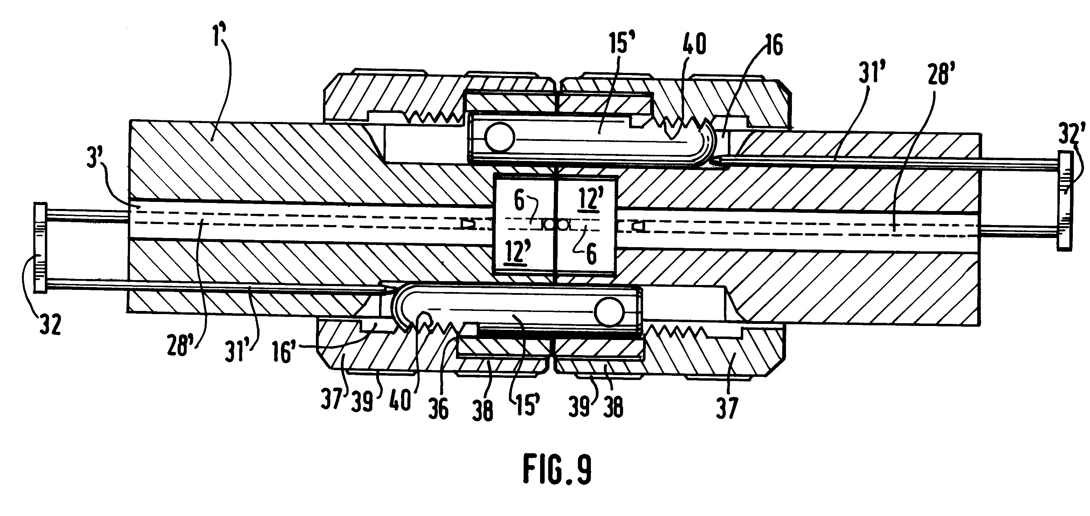

On comprend que, lorsque les deux éléments de connecteur sont accouplés, comme représenté sur la figure 9, chaque doigt de guidage 15' est retenu dans le canal de guidage 16' correspondant par une douille 37.

Comme dans le mode de réalisation des figures 1 à 6, chaque boîtier 1' comporte en outre une tige obturatrice 28' qui vient boucher l'espace laissé vide par le canal du module de connexion, et une tige d'appui 31' solidarisée à ladite tige obturatrice 28' par une liaison 32'.

Dans ce mode de réalisation, la tige d'appui 31' se situe dans le canal de guidage 16' et prend appui, en cas d'accouplement des deux éléments de connecteur, sur la face d'extrémité du doigt de guidage 15' correspondant, comme on le voit sur la figure 9, où l'on a représenté en trait interrompu l'extrémité avant des fourneaux 6 des modules de connexion.

Un ressort hélicoïdal non représenté entoure la tige obturatrice 28' sur une partie de sa longueur. Ce ressort repousse la tige obturatrice 28' vers l'avant pour qu'elle occupe le canal traversant du module de connexion lorsqu'elle se trouve en position de repos, c'est-à-dire lorsque les deux éléments de connecteur sont désaccouplés.

Il est bien entendu que les modes de réalisation qui viennent d'être décrits ne présentent aucun caractère limitatif et qu'ils pourront recevoir toute modification désirable sans sortir pour cela du cadre de l'invention.

En particulier, on a décrit des connecteurs comportant deux éléments de connecteur rigoureusement identiques mais il est clair que l'on ne sortirait aucunement du cadre de l'invention en utilisant des connecteurs dont les deux éléments de connecteur sont différents, par exemple si l'un d'entre eux seulement présentait les caractéristiques décrites ici sans distinction pour les deux éléments de connecteur.

## Revendications

**1 -** Connecteur de fibres optiques comprenant deux éléments de connecteur comportant chacun un boîtier apte à être assemblé avec le boîtier de l'autre élément de connecteur, des moyens de guidage pour l'assemblage du boîtier avec l'autre boîtier, et un module de connexion, logé dans le boîtier, apte à réaliser la connexion des fibres optiques par rapprochement et alignement avec un autre module de connexion logé dans l'autre boîtier, caractérisé par le fait que les deux éléments de connecteur sont identiques, et que chaque élément de connecteur comporte, comme moyens de guidage, d'une part, un doigt de guidage (15,15') et d'autre part, un canal de guidage (16,16'), ledit doigt de guidage (15,15') étant apte à pénétrer dans le canal de guidage (16,16') de l'autre élément de connecteur et ledit canal de guidage (16,16') étant apte à recevoir le doigt de guidage (15,15') de l'autre élément de connecteur lors de l'accouplement des deux éléments de connecteur.

**2 -** Connecteur selon la revendication 1, caractérisé par le fait que dans l'un au moins des éléments de connecteur, le module de connexion (5) comporte ses propres organes de guidage (9,10), indépendants du doigt de guidage (15) et du canal de guidage (16) du boîtier (1), le module de connexion (5) étant monté dans le boîtier (1,1') avec un jeu permettant un déplacement dudit module de connexion (5) à l'intérieur dudit boîtier (1,1').

**3 -** Connecteur selon la revendication 2, caractérisé par le fait que, dans l'un au moins des éléments de connecteur, le module de connexion (5) prend appui sur une bille (13) solidaire du boîtier (1), qui empêche le recul dudit module de connexion (5) sans lui imposer d'orientation particulière, lors de l'accouplement des deux éléments de connecteur.

**4 -** Connecteur selon l'une quelconque des revendications 1 à 3, caractérisé par le fait qu'il comporte des moyens de retenue (18,27,37,40) coopérants et déverrouillables entre au moins un doigt de guidage (15,15') et le canal de guidage (16,16') correspondant.

**5 -** Connecteur selon la revendication 4, caractérisé par le fait que les moyens de retenue comprennent, à l'extrémité du doigt de guidage (15) de l'un au moins des éléments de connecteur, une gorge (27) transversale, de préférence coupée en biseau, et, au voisinage de l'extrémité interne du canal de guidage (16) de l'autre élément de connecteur, une pièce de verrouillage (18) transversalement mobile entre une position dans laquelle elle dépasse dans le canal de guidage (16) et peut pénétrer dans la gorge (27) du doigt de guidage (15) engagé dans le canal (16) et une position dans laquelle elle libère le canal de guidage (16).

**6 -** Connecteur selon la revendication 4, caractérisé par le fait que le canal de guidage (16') de l'un au moins des éléments de connecteur débouche à l'extérieur du boîtier (1') dans sa partie arrière (34) et que les moyens de retenue comprennent, à l'extrémité du doigt de guidage (15') de l'autre élément de connecteur, un filetage hélicoïdal (40) dont les filets sont centrés sur l'axe du boîtier (1') et, au voisinage de la partie arrière du canal de guidage (16') débouchant à l'extérieur du boîtier (1') dudit élément de connecteur, une douille (37) munie d'un filetage interne, axialement solidaire du boîtier, et apte à se visser sur l'extrémité du doigt de guidage (15') de l'autre élément de connecteur, lorsque les deux éléments de connecteur sont accouplés.

**7 -** Connecteur selon l'une quelconque des revendications 1 à 6, caractérisé par le fait que, dans l'un au moins des éléments de connecteur, le module de connexion (5) comporte un canal traversant (10) destiné à coopérer avec un tube ou tige-guide (9) de l'autre module de connexion (5) de l'autre élément de connecteur et que le boîtier (1,1') de l'élément de connecteur comporte une tige obturatrice (28,28') montée coulissante dans ledit boîtier (1,1') et apte à s'engager dans le canal traversant (10) du module de connexion (5) en venant à effleurement de la face frontale (7) du boîtier (1,1'), un moyen de rappel (30) qui repousse vers l'avant la tige obturatrice (28,28'), et une tige d'appui (31,31') solidaire de la tige obturatrice (28,28') et parallèle à cette dernière, agencée de manière à ce que, lors de l'accouplement des deux éléments de connecteur, la tige d'appui (31,31') prenne appui sur l'autre boîtier (1,1') et repousse vers l'arrière la tige obturatrice (28,28'), laquelle libère alors le canal traversant (10) du module de connexion (5).

**8 -** Connecteur selon la revendication 7, caractérisé par le fait que la tige d'appui (31) fait saillie à l'avant de la face frontale (7) du boîtier (1) et prend appui sur la face frontale (7) de l'autre boîtier (1) lors de l'accouplement des deux éléments de connecteur.

**9 -** Connecteur selon la revendication 7, caractérisé par le fait que la tige d'appui (31') est logée dans le canal de guidage (16') du boîtier (1') et prend appui sur le doigt de guidage (15') de l'autre boîtier (1') lors de l'accouplement des deux éléments de connecteur.
